# FASCICULE DE BREVET EUROPEEN

(11) **EP 2 375 916 B1**
(45) Date de publication et mention de la délivrance du brevet: **03.12.2014**
(21) Numéro de dépôt: 10706011.3
(22) Date de dépôt: 07.01.2010
(51) Int. Cl.: A23K 1/18, A23C 9/123

(54) **PROCÉDÉ DE FABRICATION DE LAIT MATURÉ POUR L'ALIMENTATION D'ANIMAUX NOURRIS AU LAIT**
VERFAHREN ZUR HERSTELLUNG VON BEREIFERTE MILCH FÜR DIE NAHRUNG MILCH-GEFUTTERTE TIERE
PROCESS FOR THE MANUFACTURE OF MATURATED MILK FOR FEEDING ANIMALS FED WITH MILK

(30) Priorité: 07.01.2009 FR 0950066
(43) Date de publication de la demande: 19.10.2011
(73) Titulaire: DuPont Nutrition Biosciences ApS, 1001 Copenhagen K. (DK)
(72) Inventeur: BERGER, Claudette, F-91540 Mennecy (FR)
(74) Mandataire: Cabinet Plasseraud
(86) Numéro de dépôt international: PCT/FR2010/050018
(87) Numéro de publication internationale: WO 2010/079303

(56) Documents cités:
- FR-A1- 2 869 622
- JP-A- 5 252 900
- US-A- 4 760 055
- KIRJAVAINEN P V ET AL: "Probiotic bacteria in the management of atopic disease: Underscoring the importance of viability" JOURNAL OF PEDIATRIC GASTROENTEROLOGY AND NUTRITION, RAVEN PRESS, NEW YORK, NY, US, vol. 36, no. 2, 1 janvier 2003 (2003-01-01), pages 223-227, XP009100997 ISSN: 0277-2116
- DATABASE BIOSIS [Online] BIOSCIENCES INFORMATION SERVICE, PHILADELPHIA, PA, US; juin 2007 (2007-06), RODRIGUES MARIA A MARTINS ET AL: "IgA production, coliforms analysis and intestinal mucosa morphology of piglets that received probiotics with viable or inactivated cells" XP002547801 Database accession no. PREV200700526957

## Description

L'invention concerne un procédé de fabrication de lait maturé pour l'alimentation des animaux nourris au lait et notamment du bétail.

Pour l'alimentation du bétail, en particulier l'alimentation des veaux, certains éleveurs utilisent le « lait yogourt » ou lait au yaourt. Le lait au yaourt est un lait cru et froid, issu de la traite de l'ensemble du troupeau, qui fermente grâce à l'apport de bactéries lactiques pour obtenir un produit plus assimilable destiné à l'alimentation des veaux. L'apport de bactéries lactiques se fait par ajout d'un ou plusieurs yaourts au lait. Avant les premiers vêlages, l'éleveur réalise dans un tank à lait son mélange qui va servir toute la période d'allaitement des veaux. Il prépare un fond de cuve ajoute des yaourts, laisse fermenter une journée ou une nuit, puis complète le tank, attend encore une journée et c'est prêt à l'emploi. Tous les jours il remplace la quantité utilisée en priorité par du lait commercialisable ou non commercialisable qui ne comporte pas d'antibiotiques. Le pH du lait remonte par l'apport de lait frais et la fermentation reprend ainsi grâce aux résidus de lait ensemencé, dit « pied de cuve ». Il réalise ainsi des repiquages successifs.

La technique du lait au yaourt permet de simplifier la phase lactée des veaux. En fonction d'un plan d'alimentation prédéfini, l'éleveur allie efficacité et simplicité de la technique à mettre en oeuvre. Ceci a pour conséquence un allégement de la charge de travail de l'éleveur car ce dernier ne distribue le lait au yaourt qu'une fois par jour, le lait au yaourt étant librement accessible par les veaux tout au long de la journée. En opposition, le veau nourri au lait non fermenté doit recevoir le lait à température de la mère directement après chacune des deux traites journalières. Si le lait est à température inférieure à 35°C, le veau souffre des diarrhées liées à des problèmes de digestion.

La distribution du lait au yaourt qui peut être froid permet une certaine souplesse lors de la buvée. Cette dernière peut être déconnectée de la traite et une seule distribution par jour est suffisante.

En outre, une diminution des diarrhées est constatée par l'utilisation du lait au yaourt. Le coût de l'installation est peu important. Les veaux élevés avec la technique du lait au yaourt ont une très bonne croissance pendant la phase lactée. Cependant, la température extérieure reste le facteur limitant de cette technique, notamment dans le contrôle de la fermentation. La vitesse de fermentation du lait dépend fortement de la température ambiante. En hiver, la température ambiante trop basse empêche la fermentation et en été une température ambiante trop élevée conduit à une forte baisse du pH qui induit non seulement une diminution de l'appétence du lait au yaourt par le veau et qui induit la formation d'un lait au yaourt si visqueux qu'il obstrue les systèmes de distribution du lait par bac tétines.

Pour résoudre ces problèmes et s'affranchir de l'effet des saisons, de l'effet de la méthode de repiquage et de l'effet fermentation sur la qualité du lait produit, les inventeurs ont mis au point un procédé de fabrication d'un lait maturé par ensemencement avec un ferment inactivé pour l'alimentation d'animaux.

La présente invention a pour objet un procédé de fabrication d'un lait maturé pour l'alimentation d'animaux, dans lequel une cuve de lait est ensemencée avec un ferment inactivé.

Le lait maturé ainsi obtenu est plus digeste à température ambiante qu'un lait non ensemencé.

Typiquement, la maturation du lait pourra avoir lieu à température ambiante. L'expression « température ambiante » indique que la température n'est pas régulée. Typiquement la température ambiante pourra varier selon la saison. Elle pourra être comprise entre 4 et 50°C, préférentiellement entre 10 et 35°C et encore plus préférentiellement comprise entre 18 et 30°C.

La durée de maturation pourra varier de quelques minutes à 48 heures, préférentiellement de 30 mn à 24 heures et encore plus préférentiellement entre 1 heure et 10 heures.

Typiquement le lait maturé présente un pH compris entre 6 et 7, préférentiellement entre 6,2 et 6,8, et encore plus préférentiellement entre 6,4 et 6,8.

Typiquement le lait maturé présente une viscosité comprise entre 5 cps et 3000 cps (c'est-à-dire de 0,005 à 3 Pa.s), ou entre 5 cps et 500 cps (c'est-à-dire de 0,005 à 0,5 Pa.s). Préférentiellement, la viscosité du lait maturé est comprise entre 10 et 300 cps (c'est-à-dire de 0,01 Pa.s and 0,3 Pa.s), plus préférentiellement entre 10 et 50 cps, et encore plus préférentiellement entre 10 et 30 cps.

Typiquement un ferment inactivé pourra être obtenu par inactivation des microorganismes d'un ferment traditionnellement utilisé pour la fermentation du lait.

L'inactivation permet de diminuer sensiblement la capacité à se reproduire des microorganismes sans affecter sensiblement l'activité enzymatique des microorganismes. C'est ce qui permet la maturation du lait tout en évitant sensiblement la fermentation et l'acidification subséquente du lait.

Typiquement au cours de l'inactivation des microorganismes le nombre de microorganismes capables de reproduire pourra être diminué d'un facteur supérieur à X avec X étant choisi parmi les valeurs suivantes : 10⁴, 10⁵, 10⁶, 10⁷, 10⁸, 10⁹, 10¹⁰ ou 10¹¹.

Typiquement, les microorganismes peuvent être inactivés par un traitement à la chaleur. Les microorganismes peuvent par exemple être soumis à des températures comprises entre 40°C et 70°C.

Typiquement la durée du traitement à la chaleur dépendra de la température employée et des microorganismes à inactiver et pourra être comprise par exemple entre 15 min et 96 heures.

Les microorganismes pourront par exemple être soumis à des températures comprises entre 60°C et 70°C sur une durée comprise entre 20 et 40 heures. D'autres techniques d'inactivation des microorganismes, telles que l'ionisation ou l'inactivation à la lumière peuvent également utilisées. Les microorganismes peuvent par exemple être inactivés par stockage sur de longues périodes à des températures et/ou en présence d'humidité qui ne permettent pas de maintenir la viabilité des microorganismes.

Les microorganismes constituant le ferment peuvent être des levures et/ou des bactéries.

Avantageusement, les microorganismes sont des bactéries lactiques.

Typiquement la cuve de lait pourra contenir uniquement du colostrum, un mélange colostrum lait ou seulement du lait. Typiquement un mélange colostrum lait pourra comprendre entre 30 et 70% (% v/v) de colostrum.

Le lait utilisé pourra être préalablement pasteurisé ou stérilisé ou encore être le lait brut directement obtenu après la traite. Typiquement il pourra s'agir de lait de vache, de brebis, de chèvre ou de bufflesse. Il peut également s'agir de lait d'origine végétale comme par exemple du lait de soja.

Le lait utilisé pourra être un lait reconstitué à partir de lait en poudre, de colostrum en poudre, d'un mélange de lait en poudre et de colostrum en poudre, ou d'une poudre d'aliment d'allaitement (ou lacto-remplaceur).

Typiquement la poudre d'aliment d'allaitement pourra être destinée aux veaux d'élevage.

Typiquement les poudres de lait ou de colostrum pourront être obtenues par lyophilisation.

Typiquement le taux de reconstitution de la poudre pourra être compris entre 50 g/ L et 300 g/L.

Typiquement la poudre pourra être dissoute à une température comprise entre 50°C et 70°C.

Le lait reconstitué obtenu pourra être ensuite refroidi à une température inférieure à 47°C, préférentiellement comprise entre 37°C et 45°C, plus préférentiellement comprise entre 40°C et 45°C et être ensemencée à cette température avec un ferment inactivé.

L'utilisation de poudre permet à l'éleveur d'avoir une grande flexibilité quand à l'administration de lait fermenté aux animaux, car l'éleveur peut dissocier totalement l'administration de lait fermenté de la traite.

Un objet de l'invention a trait à un kit pour l'alimentation animale comprenant séparément:
- un ferment inactivé ; et
- un lait en poudre, un colostrum en poudre, ou un mélange de lait en poudre et de colostrum en poudre.

Typiquement, l'homme du métier pourra utiliser les deux éléments du kit pour d'une part produire un lait reconstitué avec le lait en poudre, le colostrum en poudre, un mélange de lait en poudre et de colostrum en poudre, ou la poudre d'aliment d'allaitement et d'autre part ensemencer ensuite le lait reconstitué ave le ferment inactivé.

Un autre objet de l'invention a trait à un kit comprenant séparément:
- un ferment inactivé ; et
- un lait congelé, un colostrum congelé, un mélange congelé de lait et de colostrum, ou un lait congelé reconstitué à partir d'aliment d'allaitement.

Alternativement un objet de l'invention a trait à une composition pour l'alimentation animale comprenant un ferment inactivé mélangé ou non à un lait en poudre, un colostrum en poudre, ou un mélange de lait en poudre et de colostrum en poudre.

Le lait utilisé peut être un lait commercialisable ou non commercialisable. Typiquement le lait maturé pourra être destiné à l'alimentation des animaux, préférentiellement des jeunes animaux et encore plus préférentiellement des jeunes animaux d'élevage. Par exemple, le lait maturé pourra être destiné à l'alimentation des veaux et être obtenu à partir de lait ou de colostrum de vache. Avantageusement, le procédé de fabrication selon l'invention peut être mis en oeuvre sur l'exploitation de l'éleveur du bétail qui est nourri avec le lait maturé obtenu par le procédé.

Le ferment inactivé pourra être soit sous forme de poudre ou de comprimé soit sous forme de suspension. Par exemple la demande FR2869622 décrit des comprimés pour l'ensemencement direct. Les bactéries du ferment pourront être sous formes sèches, lyophilisées ou congelées. Dans le cas des formes sèches, lyophilisées ou congelées, le ferment inactivé pourra être mis en suspension avant d'être utilisé pour ensemencer la cuve de lait.

Le ferment peut être réhydraté, re-suspendu dans un milieu aqueux ou dans du lait avant ensemencement.

Ces types de ferment ont pour avantage de pouvoir être introduits directement dans le milieu à traiter ou à ensemencer. Cela limite fortement les risques de contamination du lait maturé dans un environnement qui n'est pas contrôlé d'un point de vue microbiologique.

Typiquement les ferments mis en oeuvre selon l'invention peuvent contenir différents additifs ajoutés au cours du séchage ou au cours de la lyophilisation des bactéries.

Les levures utilisables dans ce procédé sont par exemple du type *Saccharomyces ssp,* préférentiellement *Saccharomyces cerevisiae* et/ou *Saccharomyces Boulardii, Kluyveromyces spp., Debaryomyces spp.*

Typiquement les bactéries lactiques comprises dans le ferment sont celles appartenant aux genres *Lactococcus, Streptococcus, Lactobacillus, Leuconostoc, Pediococcus, Bifidobacterium, Brevibacterium, Carnobacterium, Enterococcus, Micrococcus, Vagococcus, Staphylococcus, Bacillus, Kocuria, Arthrobacter, Proprionibacterium* et *Corynebacterium.* Ces bactéries lactiques peuvent être utilisées seules ou en mélanges. Préférentiellement le ferment comprendra la souche *Streptococcus thermophilus et*/*ou Lactobacillus delbrueckii ssp par exemple Lactobacillus delbrueckii bulgaricus, Lactobacillus delbrueckii lactis.* Des bactéries du type *Proprionibacterium acidilactici, Proprionibacterium jensenii, Proprionibacterium freudenreichii* et *Propionibacterium acidipropiollici* peuvent avantageusement être utilisées.

Avantageusement, le ferment pourra comprendre également *Lactobacillus acidophilus*, *Lactobacillus casei, Lactobacillus paracasei, Lactobacillus plantarum, Lactobacillus salivarius*, *Lactobacillus fermentum*, *Bifidobacterium. bifidum, Bifidobacterium longum, Bifidobacterium lactis, Bifidobacterium infantis, Bifidobacterium brevis* ou un mélange de plusieurs de ces microorganismes.

Avantageusement, le ferment utilisé comprend indépendamment ou en combinaison des bactéries lactiques du type *Streptococcus thermophilus, Lactobacillus acidophilus, Bifidobacterium lactis* et *Lactobacillus delbrueckii ssp.*

Plus avantageusement, le ferment utilisé comprend indépendamment ou en combinaison des souches de *Streptococcus thermophilus* déposées selon le Traité de Budapest au nom de Rhodia Food, ZA de Bruxières , 86220 Dange-Saint-Romain, France, sous le numéro 1-2423 le 5 avril 2000 à la Collection Nationale des Cultures de Microorganismes (ou CNCM, 25 rue du Dr Roux, 75724 Paris) ou déposées selon le Traité de Budapest au nom de Danisco France, 20 rue de Brunel, 75017 Paris, sous les numéros I-3782 et 1-3783 le 03 juillet 2007 à la CNCM.

Dans une autre mode de réalisation avantageux, le ferment utilisé comprend en outre, indépendamment ou en combinaison des souches de *Lactobacillus acidophilus, Bifidobacterium* lactis, *Lactobacillus delbrueckii ssp* déposées selon le Traité de Budapest au nom de Danisco France, 20 rue de Brunel, 75017 Paris, respectivement sous les numéros 1-3784, I-3780 et 1-3781 le 03 juillet 2007 à la CNCM.

Préférentiellement, avant inactivation, le ferment utilisé comporte au moins 20% en cfu sur le nombre de cfu total du ferment de *Streptococcus thermophilus,* préférentiellement au moins 40% en cfu. L'expression « cfu » signifie « colony forming unit » ou « unité formant colonie ».

Avantageusement, avant inactivation, le ferment utilisé comporte au moins 1% en cfu sur le nombre de cfu total du ferment de *Lactobacillus acidophilus* et/ou de *Bifidobacterium* ssp, et préférentiellement au moins 3% en cfu.

Typiquement, pour le procédé de maturation du lait selon l'invention, on pourra utiliser un ferment comprenant des bactéries lactiques, qui comprend avant inactivation, par litre de lait à ensemencer, entre 10⁸ et 10¹¹ cfu, préférentiellement entre 10⁹ et 5 10¹⁰cfu, et encore plus préférentiellement entre 5 10⁹ et 10¹⁰cfu.

Selon un autre mode de réalisation, le procédé de maturation peut mettre en oeuvre un ferment inactivé en combinaison avec un ferment activé, comportant par exemple des bactéries lactiques ou des probiotiques.

D'excellents résultats ont été obtenus avec un ferment comprenant un mélange de bactéries appartenant au genre *Streptococcus* avec des bactéries appartenant au genre *Lactobacillus.*

Typiquement la durée de la maturation du lait sera comprise entre 0,1 et 48 heures, préférentiellement entre 30 mn et 24 heures et encore plus préférentiellement entre 1 heure et 10 heures.

Typiquement le lait maturé obtenu pourra présenter un pH compris entre 6 et 7, préférentiellement entre 6,2 et 6,8, et encore plus préférentiellement entre 6,4 et 6,7.

Le lait maturé obtenu pourra présenter une viscosité comprise entre 5 cps et 3000 cps, préférentiellement entre 5 cps et 500 cps, plus préférentiellement entre 10 et 50 cps et encore plus préférentiellement entre 10 et 30 cps.

Typiquement la viscosité du lait maturé pourra être mesurée en utilisant toute technique classique de mesure de la viscosité connue de l'homme du métier. Par exemple, la viscosité du lait maturé pourra être mesurée en utilisant un viscosimètre du type Brookfield DV-II+ en appliquant les protocoles décrits dans le tableau 1 en fonction de la gamme de viscosité du produit.

**Tableau 1 : Protocoles de mesures de viscosité en fonction de la gamme de viscosité du produit.**

| | **Protocole A** | **Protocole B** |
|---|---|---|
| **Type de produits mesurés** | produits à texture liquide | produits à texture gélifiée |
| **Préparation de l'échantillon** | Homogénéisation légère avec 3 tours de cuillère à café | Brassage avec 20 tours de cuillère à café |
| **T°C de mesure** | +8°C | +8°C |
| **Type du contenant et volume mesuré** (respect taille géométrie et volume) | 200 ml de produit dans un bécher de 250 ml | 100 ml de produit dans un pot yaourt en verre de 120ml |
| **Géométrie du mobile** | Disque RV1 | Disque RV3 |
| **Vitesse de rotation du mobile** | 100 rotations par minutes (ou rpm) | 10 rotations par minutes (ou rpm) |
| **Gamme de viscosité** | 10 - 100 cps | 100 - 10000 cps |

La lecture de la mesure se fait après 20 secondes de rotation du mobile dans chacun des protocoles.

Typiquement au cours du procédé de fabrication du lait maturé selon l'invention, l'homme du métier pourra ajouter des additifs dans la cuve de lait tels que des vitamines, des facteurs de croissance, des autolysats de levures, des acides aminés, des sels minéraux, des huiles essentielles, des colorants préférentiellement naturels, des enzymes, des fibres solubles, des extraits végétaux, des sucres lents ou rapides. Cet ajout pourra avoir lieu avant, pendant ou après la maturation du lait.

Un autre objet de l'invention est un lait maturé susceptible d'être obtenu selon un procédé de maturation de l'invention.

Typiquement un lait maturé selon l'invention pourra être destiné à l'alimentation d'animaux, préférentiellement d'animaux d'élevage.

Typiquement un lait maturé selon l'invention pourra présenter un pH compris entre 6 et 7, préférentiellement entre 6,2 et 6,8, et encore plus préférentiellement entre 6,4 et 6,7.

Typiquement un lait maturé selon l'invention pourra présenter une viscosité comprise entre 5 cps et 3000 cps, préférentiellement entre 5 cps et 500 cps, plus préférentiellement entre 10 et 50 cps et encore plus préférentiellement entre 10 et 30 cps.

L'invention a également pour objet l'utilisation de ferment inactivé pour la maturation d'un lait.

L'invention a également pour objet une méthode pour nourrir des animaux avec du lait maturé dans laquelle le lait maturé est fabriqué selon un procédé de fabrication tel que décrit précédemment.

La présente invention sera mieux illustrée ci-après à l'aide de l'exemple qui suit. Cet exemple est donné uniquement à titre d'illustration de l'objet de l'invention, dont il ne constitue en aucune manière une limitation.

### Exemple

Un lot témoin de plusieurs veaux ont été nourris avec un lait maturé pendant 17 heures à température ambiante avec un ferment vivant composé de souches de *Streptococcus thermophilus* et de *Lactobacillus acidophilus .* Un deuxième lot de veau du même âge a été nourri avec les mêmes ferments mais les microorganismes ont été inactivés par un traitement à la chaleur (65°C pendant 36 heures).

Aucune diarrhée n'a été constatée chez les veaux nourris avec le lait maturé. Les deux lots de veaux se sont comportés de la même façon et les performances de croissance sont identiques.

Le pH du lait maturé obtenu après 17 heures de maturation à 25°C est sensiblement identique au pH du lait avant maturation.

L'utilisation du lait maturé selon l'invention permet d'obtenir un lait pour l'alimentation des veaux pouvant être distribué en une seule fois et à température ambiante et dont la valeur de pH est totalement maîtrisée.

## Revendications

1. Procédé de fabrication d'un lait maturé pour l'alimentation d'animaux, dans lequel une cuve de lait est ensemencée avec un ferment inactivé.

2. Procédé selon la revendication 1, dans lequel ferment inactivé comprend des microorganismes inactivés par un traitement à la chaleur.

3. Procédé selon la revendication 1 ou 2, dans lequel la maturation du lait a lieu à température ambiante.

4. Procédé selon l'une des revendications précédentes, dans lequel la viscosité du lait maturé est comprise entre 10 et 300 cps, plus préférentiellement entre 10 et 50 cps, et encore plus préférentiellement entre 10 et 30 cps.

5. Procédé selon l'une des revendications précédentes, dans lequel le pH du lait maturé est compris entre 6 et 7, préférentiellement entre 6,2 et 6,8, et encore plus préférentiellement entre 6,4 et 6,8.

6. Procédé selon l'une des revendications précédentes, dans lequel la cuve de lait est une cuve de lait reconstitué à partir de lait en poudre, de colostrum en poudre, d'un mélange de lait en poudre et de colostrum en poudre, ou d'une poudre d'aliment d'allaitement.

7. Procédé selon l'une des revendications précédentes, dans lequel ferment comprend des bactéries lactiques inactivées.

8. Procédé selon la revendication 7, dans lequel les bactéries lactiques comprises dans le ferment sont des bactéries lactiques appartenant au genre *Lactococcus, Streptococcus, Lactobacillus, Leuconostoc, Pediococcus, Bifidobacterium, Brevibacterium, Carnobacterium, Enterococcus, Micrococcus, Vagococcus, Staphylococcus, Bacillus, Kocuria, Arthrobacter, Proprionibacterium* ou *Corynebacterium.*

9. Procédé selon la revendication 7 ou 8, dans lequel le ferment inactivé utilisé comprend indépendamment ou en combinaison des bactéries lactiques du type *Streptococcus thermophilus, Lactobacillus acidophilus, Bifidobacterium lactis* et *Lactobacillus delbrueckii ssp.*

10. Procédé selon l'une des revendications 7 à 9, dans lequel le ferment inactivé utilisé comprend indépendamment ou en combinaison des souches de *Streptococcus thermophillus* déposées sous le numéro 1-2423 le 5 avril 2000 à la CNCM ou déposées sous les numéros I-3782 et I-3783 le 03 juillet 2007 à la CNCM.

11. Procédé selon l'une des revendications 7 à 10, dans lequel le ferment inactivé utilisé comprend, indépendamment ou en combinaison des souches de *Lactobacillus acidophilus, Bifidobacterium lactis* et *Lactobacillus delbrueckii ssp* déposées respectivement sous les numéros I-3784, I-3780 et 1-3781 le 03 juillet 2007 à la CNCM.

12. Procédé selon l'une des revendications précédentes, dans lequel le ferment utilisé comporte avant inactivation au moins 20% en cfu sur le nombre de cfu total du ferment de *Sireptococcus thermophilus,* préférentiellement au moins 40% en cfu.

13. Procédé selon l'une des revendications précédentes, dans lequel le ferment utilisé comporte avant inactivation au moins 1% en cfu sur le nombre de cfu total du ferment de *Lactobacillus acidophilus* et/ou de *Bifidobacterium ssp,* et préférentiellement au moins 3% en cfu.

14. Procédé selon l'une des revendications précédentes, dans lequel le ferment inactivé comprend des microorganismes probiotiques tels que *Lactobacillus acidophilus, Lactobacillus casei, Bifidobacterium bifidum, Bifidobacterium longum, Bifidobacterium lactis*, *Bifidobacterium infantis* ou un mélange de plusieurs de ces microorganismes.

15. Lait maturé susceptible d'être obtenu par un procédé de fabrication tel que défini selon l'une des revendications 1 à 14.

16. Utilisation d'un ferment inactivé pour la fabrication à température ambiante d'un lait maturé pour l'alimentation d'animaux.

17. Méthode pour nourrir des animaux avec du lait maturé dans laquelle le lait maturé est fabriqué selon un procédé de fabrication tel que défini selon l'une des revendications 1 à 14.

18. Kit pour l'alimentation animale comprenant séparément :
- un ferment inactivé ; et
- un lait en poudre, un colostrum en poudre ou un mélange de lait en poudre et de colostrum en poudre.

19. Kit comprenant séparément:
- un ferment inactivé ; et
- un lait congelé, un colostrum congelé, un mélange congelé de lait et de colostrum, ou un lait congelé reconstitué à partir d'aliment d'allaitement.

20. Composition pour l'alimentation animale comprenant un ferment inactivé et un lait en poudre, un colostrum en poudre ou un mélange de lait en poudre et de colostrum en poudre.

## Patentansprüche

1. Verfahren zur Herstellung gereifter Milch zur Fütterung von Tieren, bei dem ein Milchbehälter mit einem inaktivierten Ferment beimpft wird.

2. Verfahren nach Anspruch 1, bei dem das inaktivierte Ferment Mikroorganismen umfasst, die durch eine Wärmebehandlung inaktiviert wurden.

3. Verfahren nach Anspruch 1 oder 2, bei dem die Reifung der Milch bei Raumtemperatur erfolgt.

4. Verfahren nach einem der vorangehenden Ansprüche, bei dem die Viskosität der gereiften Milch zwischen 10 und 300 cps, bevorzugter zwischen 10 und 50 cps und noch bevorzugter zwischen 10 und 30 cps liegt.

5. Verfahren nach einem der vorangehenden Ansprüche, bei dem der pH-Wert der gereiften Milch zwischen 6 und 7, bevorzugt zwischen 6,2 und 6,8 und noch bevorzugter zwischen 6,4 und 6,8 liegt.

6. Verfahren nach einem der vorangehenden Ansprüche, bei dem der Milchbehälter ein Behälter mit rekonstituierter Milch aus Milchpulver, Kolostrumpulver, einer Mischung aus Milchpulver und Kolostrumpulver oder einem Milchaustauschfuttermittelpulver ist.

7. Verfahren nach einem der vorangehenden Ansprüche, bei dem das Ferment inaktivierte Milchsäurebakterien umfasst.

8. Verfahren nach Anspruch 7, bei dem von dem Ferment umfassten Milchsäurebakterien Milchsäurebakterien der Gattung *Lactococcus, Streptococcus, Lactobacillus, Leuconostoc*, *Pediococcus, Bifidobacterium, Brevibacterium, Carnobacterium, Enterococcus*, *Micrococcus*, *Vagococcus*, *Staphylococcus, Bacillus, Kocuria, Arthrobacter*, *Proprionibacterium* oder *Corynebacterium* sind.

9. Verfahren nach Anspruch 7 oder 8, in dem das verwendete inaktivierte Ferment allein oder in Kombination Milchsäurebakterien vom Typ *Streptococcus thermophilus*, *Lactobacillus acidophilus, Bifidobacterium lactis* und *Lactobacillus delbrueckii ssp* umfasst.

10. Verfahren nach einem der Ansprüche 7 bis 9, bei dem das verwendete inaktivierte Ferment allein oder in Kombination *Streptococcus thermophilus*-*Stämme* umfasst, die unter der Nummer I-2423 am 5. April 2000 bei der CNCM oder unter den Nummern I-3782 und I-3783 am 3. Juli 2007 bei der CNCM hinterlegt wurden.

11. Verfahren nach einem der Ansprüche 7 bis 10, bei dem das verwendete inaktivierte Ferment allein oder in Kombination *Lactobacillus acidophilus-, Bifidobacterium lactis-* und *Lactobacillus delbrueckii* ssp-Stämme umfasst, die unter den Nummern 1-3784,1-3780 bzw. I-3781 am 03. Juli 2007 bei der CNCM hinterlegt wurden.

12. Verfahren nach einem der vorangehenden Ansprüche, bei dem das verwendete Ferment vor der Inaktivierung mindestens 20% CFU, bevorzugt mindestens 40% CFU, von *Streptococcus thermophilus*, bezogen auf die CFU-Gesamtzahl des Ferments, aufweist.

13. Verfahren nach einem der vorangehenden Ansprüche, bei dem das verwendete Ferment vor der Inaktivierung mindestens 1% CFU, bevorzugt mindestens 3% CFU, von *Lactobacillus acidophilus* und/oder *Bifidobacterium ssp,* bezogen auf die CFU-Gesamtzahl des Ferments, aufweist.

14. Verfahren nach einem der vorangehenden Ansprüche, bei dem das inaktivierte Ferment probiotische Mikroorganismen wie *Lactobacillus acidophilus, Lactobacillus casei, Bifidobacterium bifidum, Bifidobacterium longum*, *Bifidobacterium lactis, Bifidobacterium infantis* oder eine Mischung von mehreren dieser Mikroorganismen umfasst.

15. Gereifte Milch, die durch ein nach einem der Ansprüche 1 bis 14 definiertes Herstellungsverfahren herstellbar ist.

16. Verwendung eines inaktivierten Ferments für die Herstellung von bei Raumtemperatur gereifter Milch zur Fütterung von Tieren.

17. Verfahren zur Fütterung von Tieren mit gereifter Milch, bei dem die gereifte Milch durch ein nach einem der vorangehenden Ansprüche 1 bis 14 definiertes Herstellungsverfahren hergestellt wird.

18. Set zur Fütterung von Tieren, getrennt umfassend:
- ein inaktiviertes Ferment; und
- ein Milchpulver, Kolostrumpulver oder eine Mischung aus Milchpulver und Kolostrumpulver.

19. Set, getrennt umfassend:
- ein inaktiviertes Ferment; und
- tiefgefrorene Milch, tiefgefrorenes Kolostrum, eine tiegefrorene Mischung aus Milch und Kolostrum oder tiefgefrorene Milch, die aus Milchaustauschfuttermittel rekonstituiert wurde.

20. Zusammensetzung zur Fütterung von Tieren, umfassend ein inaktiviertes Ferment und ein Milchpulver, Kolostrumpulver oder eine Mischung aus Milchpulver und Kolostrumpulver.

## Claims

1. A method for producing a cured milk for animal feeding, wherein a milk vat is seeded with an inactivated ferment.

2. The method according to claim 1, wherein the inactivated ferment comprises microorganisms inactivated by a heat treatment.

3. The method according to claim 1 or 2, wherein curing of the milk takes place at ambient temperature.

4. The method according to any one of the preceding claims, wherein the viscosity of the cured milk is between 10 and 300 cP, more preferably between 10 and 50 cP, and even more preferably between 10 and 30 cP.

5. The method according to any one of the preceding claims, wherein the pH of the cured milk is between 6 and 7, preferably between 6.2 and 6.8, and even more preferably between 6.4 and 6.8.

6. The method according to any one of the preceding claims, wherein the milk vat is a vat of milk reconstituted from powdered milk, from powdered colostrum, from a mixture of powdered milk and powdered colostrum, or from a powdered suckling feed.

7. The method according to any one of the preceding claims, wherein the ferment comprises inactivated lactic acid bacteria.

8. The method according to claim 7, wherein the lactic acid bacteria comprised in the ferment are lactic acid bacteria belonging to the genus *Lactococcus, Streptococcus, Lactobacillus, Leuconostoc, Pediococcus, Bifidobacterium, Brevibacterium*, *Carnobacterium, Enterococcus*, *Micrococcus, Vagococcus, Staphylococcus, Bacillus, Kocuria*, *Arthrobacter, Propionibacterium* or *Corynebacterium.*

9. The method according to claim 7, wherein the inactivated ferment used comprises, independently or in combination, lactic acid bacteria of the type *Streptococcus thermophilus*, *Lactobacillus acidophilus, Bifidobacterium lactis* and *Lactobacillus delbrueckii ssp.*

10. The method according to any one of claims 7 to 9, wherein the inactivated ferment used comprises, independently or in combination, strains of *Streptococcus thermophilus* deposited under number I-2423 on 5 April 2000 in the CNCM or deposited under numbers I-3782 and I-3783 on 03 July 2007 in the CNCM.

11. The method according to any one of claims 7 to 10, wherein the inactivated ferment used comprises, independently or in combination, strains of *Lactobacillus acidophilus, Bifidobacterium lactis* and *Lactobacillus delbrueckii ssp* deposited respectively under numbers I-3784, I-3780 and I-3781 on 03 July 2007 in the CNCM.

12. The method according to any one of the preceding claims, wherein the ferment used comprises, before inactivation, at least 20% CFU out of the total number of CFU of ferment of *Streptococcus thermophilus*, preferably at least 40% CFU.

13. The method according to any one of the preceding claims, wherein the ferment used comprises, before inactivation, at least 1% CFU out of the total number of CFU of ferment of *Lactobacillus acidophilus* and/or of *Bifidobacterium ssp,* and preferably at least 3% CFU.

14. The method according to any one of the preceding claims, wherein the inactivated ferment comprises probiotic microorganisms such as *Lactobacillus acidophilus, Lactobacillus casei, Bifidobacterium bifidum, Bifidobacterimu longum, Bifidobacterium lactis, Bifidobacterium infantis* or a mixture of several of these microorganisms.

15. A cured milk obtainable by a method of production according to any one of claims 1 to 14.

16. Use of an inactivated ferment for producing a cured milk for animal feeding at ambient temperature.

17. A method for feeding animals with cured milk in which the cured milk is produced according to a method of production according to any one of claims 1 to 14.

18. A kit for animal feeding comprising separately:
- an inactivated ferment; and
- a powdered milk, a powdered colostrum or a mixture of powdered milk and powdered colostrum.

19. A kit comprising separately:
- an inactivated ferment; and
- a frozen milk, a frozen colostrum, a mixture of frozen milk and frozen colostrum, or a frozen milk reconstituted from suckling feed.

20. A composition for animal feeding comprising an inactivated ferment and a powdered milk, a powdered colostrum or a mixture of powdered milk and powdered colostrum.
